Europäisches Patentamt

European Patent Office

Office européen des brevets

(11) Numéro de publication: **0 202 983**
**B1**

(12) **FASCICULE DE BREVET EUROPEEN**

(45) Date de publication du fascicule du brevet:
09.03.88

(51) Int. Cl.⁴: **B 29 C 53/60,** B 31 C 1/00,
F 17 C 3/08

(21) Numéro de dépôt: **86400838.8**

(22) Date de dépôt: **18.04.86**

(54) **Procédé et machine de fabrication d'une isolation thermique multicouche autour et le long d'une traversée solide, et resérvoir cryogénique correspondant.**

(30) Priorité: **23.04.85 FR 8506131**
**05.06.85 FR 8508471**

(43) Date de publication de la demande:
**26.11.86 Bulletin 86/48**

(45) Mention de la délivrance du brevet:
**09.03.88 Bulletin 88/10**

(84) Etats contractants désignés:
**BE DE FR GB IT NL SE**

(56) Documents cités:
**FR - A - 1 517 399**
**FR - A - 2 345 658**
**US - A - 3 358 867**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07 (FR)**

(72) Inventeur: **Faudou, Jean-Yves, 21, avenue du Moulin de la Touche, F-44240 Suce-Sur-Erdre (FR)**
Inventeur: **Simon, Bernard, 7, Résidence Saint Martin, F-94420 Le Plessis-Trevise (FR)**

(74) Mandataire: **Jacobson, Claude et al, L'AIR LIQUIDE, SOCIETE ANONYME POUR L'ETUDE ET L'EXPLOITATION DES PROCEDES GEORGES CLAUDE 75, quai d'Orsay, F-75321 Paris Cédex 07 (FR)**

## Description

La présente invention concerne un procédé de fabrication d'une isolation thermique multicouche autour et le long d'une traversée solide, notamment d'un col de remplissage d'un réservoir pour fluide cryogénique, dans lequel on enroule autour de la traversée et de la cuve du réservoir au moins une bande en matière isolante thermiquement en formant plusieurs couches superposées. Elle concerne également une machine à calorifuger pour la mise en œuvre de ce procédé et un réservoir pour fluide cryogénique obtenu par ce procédé.

Le document US-A-3 358 867, par exemple, décrit un procédé et un dispositif du genre énoncé dans le préambule des revendications 1 de procédé et 10 de machine.

On utilise dans l'industrie des réservoirs de fluides cryogéniques, en l'occurrence de gaz liquéfiés tels que l'hélium ou l'azote liquide. Ces réservoirs «ouverts» encore appelés «Dewar» comprennent généralement une cuve en aluminium ou en acier inoxydable, dans l'orifice de laquelle est engagé et fixé un col de remplissage cylindrique qui peut être en matière plastique ou en acier inoxydable. Ces réservoirs doivent être revêtus d'une couche d'isolation thermique à haute performance pour éviter une évaporation trop rapide du liquide stocké. Cette couche d'isolation est généralement réalisée au moyen de l'enroulement d'au moins une bande isolante tout autour de la cuve et également sur toute la hauteur du col de remplissage. L'enroulement de la ou des bandes isolantes est réalisé au moyen d'une machine de calorifugeage qui enroule la ou les bandes isolantes autour de la cuve et du col du réservoir tandis que ce dernier est entraîné en rotation autour de son axe.

Pour obtenir une excellente isolation à l'endroit du col de remplissage, il est nécessaire d'obtenir un bon raccordement des couches formant écrans d'isolation sur toute la hauteur de ce col, afin de protéger au mieux le col sur toute sa hauteur à l'encontre des effets de rayonnement et de refermer au maximum les isothermes tout autour du réservoir. Il est donc nécessaire, au cours de l'enveloppement du réservoir, de faire «monter» progressivement le long du col les diverses couches isolantes constituant l'isolation thermique.

Pour obtenir une telle montée des couches isolantes le long du col on connaît déjà un procédé consistant à intercaler, en certains endroits du col, des matelas annulaires en matière isolante, par exemple en laine de verre, ces matelas étant disposés entre des groupes de couches isolantes. Un tel procédé présente toutefois l'inconvénient qu'il nécessite l'arrêt de la machine pour permettre la mise en place de ces matelas intercalaires.

Un autre procédé connu consiste à fixer périodiquement sur le col, à l'extérieur de celui-ci, des collerettes annulaires, au-dessus d'un groupe de couches isolantes, en laissant un vide entre chaque collerette et le groupe de couches isolantes sous-jacent. Là encore ce procédé exige un arrêt de la machine pour la mise en place des collerettes sur le col.

Un autre procédé connu consiste à replier sur elle-même chaque couche isolante dans la zone du col. Ce procédé est le plus employé actuellement car il peut être réalisé d'une manière automatique. Par contre, avec ce procédé, le nombre de couches isolantes est pratiquement imposé par la longueur du col, ce qui peut conduire, dans le cas d'un réservoir de très longue autonomie, à col long, à un excès de couches isolantes nuisant au poids et à l'encombrement du réservoir dans son ensemble.

La présente invention vise à remédier à ces inconvénients en procurant un procédé facile à mettre en œuvre, économique, pouvant être réalisé de manière automatisée sur des séries importantes et permettant d'obtenir une répartition optimisée des couches isolantes qui autorisent un bon bouclage thermique.

A cet effet, l'invention a pour objet un procédé de fabrication d'une isolation thermique multicouche autour et le long d'une traversée solide, notamment d'un col de remplissage d'un réservoir contenant un fluide cryogénique, dans lequel on enroule autour de la traversée et de la cuve du réservoir au moins une bande en matière isolante thermiquement en formant plusieurs couches superposées, caractérisé en ce qu'on fixe chaque emplacement de contact de la bande avec la traversée au moyen d'un cordon appliqué en hélice sur ladite traversée.

Dans un premier mode de mise en œuvre, on enroule préalablement le cordon sur la traversée, juste avant l'application de la bande isolante, et on applique ensuite les couches isolantes successives de manière que ces couches prennent appui, à l'endroit où elles sont en contact avec la traversée, sur le cordon hélicoïdal préalablement enroulé, en se superposant les unes aux autres le long de ce cordon.

Dans un second mode de mise en œuvre, pour chaque couche isolante, on applique tout d'abord la bande isolante sur la traversée, de façon que la partie marginale intérieure de cette bande recouvre une petite fraction de la longueur de la traversée, puis on enroule le cordon sur ladite partie marginale, en coinçant celle-ci sur la traversée.

Dans un troisième mode de mise en œuvre, on enroule au préalable en hélice le cordon sur la traversée et on le fixe sur toute la longueur utile de cette traversée, puis on procède à l'enroulement de la bande autour de la traversée et de la cuve du réservoir de façon que cette bande prenne appui sur le cordon à chaque emplacement de contact avec la traversée.

Le procédé suivant l'invention offre l'avantage qu'il permet d'obtenir la répartition désirée, le long de la traversée ou du col du récipient, du même nombre de couches isolantes que celui des couches utilisées normalement pour l'isolation du récipient. On peut en choisissant d'une manière appropriée la nature, le diamètre moyen, le pas et le diamètre d'enroulement du support que constitue le cordon isolant hélicoïdal, recouvrir un large domaine de caractéristiques. Notamment le pas du cordon hélicoïdal peut être constant ou variable le long de la traversée.

L'invention a également pour objet une machine à calorifuger mettant en œuvre le procédé suivant l'invention. Cette machine comprend des moyens pour entraîner en rotation, autour de son axe, un réservoir de fluide à calorifuger, et des moyens pour enrouler autour du récipient et de son col de remplissage au moins une bande isolante formant plusieurs couches isolantes superposées, et est caractérisée en ce qu'elle comprend des moyens pour enrouler en hélice un cordon sur le col du réservoir.

Suivant une caractéristique complémentaire de l'invention, la machine comprend une bobine de cordon isolant, une débobineuse comportant un corps cylindrique disposé parallèlement au col du récipient, en étant aligné transversalement avec celui-ci, ce corps cylindrique présentant dans sa surface périphérique un filetage dans lequel passe le cordon isolant issu de la bobine, en formant au moins une spire, le cordon s'étendant entre la débobineuse et le col du réservoir pour constituer sur ce col, au fur et à mesure de la rotation du réservoir et de celle de la débobineuse qui en résulte, une hélice dont le pas est fonction de celui du filetage du corps cylindrique et de la débobineuse.

L'invention a également pour objet un réservoir pour fluide cryogénique comportant un col de remplissage isolé au moyen de couches successives dont l'emplacement de contact avec le col est fixé par un cordon enroulé en hélice sur le col et obtenu par le procédé ci-dessus défini.

On décrira ci-après, à titre d'exemples non limitatifs, quelques formes d'exécution de la présente invention, en référence aux dessins annexés sur lesquels:

la figure 1 est une vue en perspective partielle de la partie supérieure d'un réservoir de fluide cryogénique en cours de fabrication de l'isolation sur la cuve du réservoir et autour du col de ce réservoir, par le procédé suivant l'invention;

la figure 2 est une demi-vue en coupe axiale schématique du col du réservoir recouvert des couches isolantes successives;

la figure 3 est une vue en élévation schématique d'une machine à calorifuger suivant l'invention;

la figure 4 est une vue en perspective partielle de la partie supérieure d'un réservoir de fluide cryogénique en cours de fabrication de l'isolation sur la cuve du réservoir et autour du col de ce réservoir par un autre procédé suivant l'invention;

la figure 5 est une vue partielle en coupe longitudinale du col recouvert des couches isolantes successives suivant le procédé illustré à la figure 4;

la figure 6 est une vue analogue à la figure 2 mais correspondant à une variante;

la figure 7 est une vue analogue à la figure 4 illustrant un cas limite des procédés illustrés aux figures 1 et 4; et

la figure 8 est une vue analogue aux figures 5 et 6 mais correspondant au procédé de la figure 7.

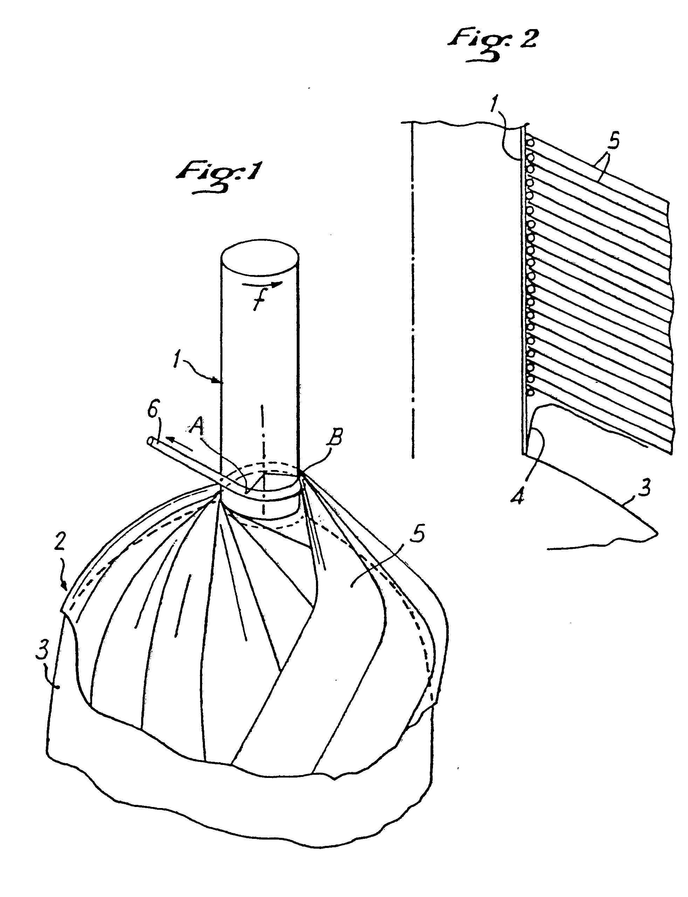

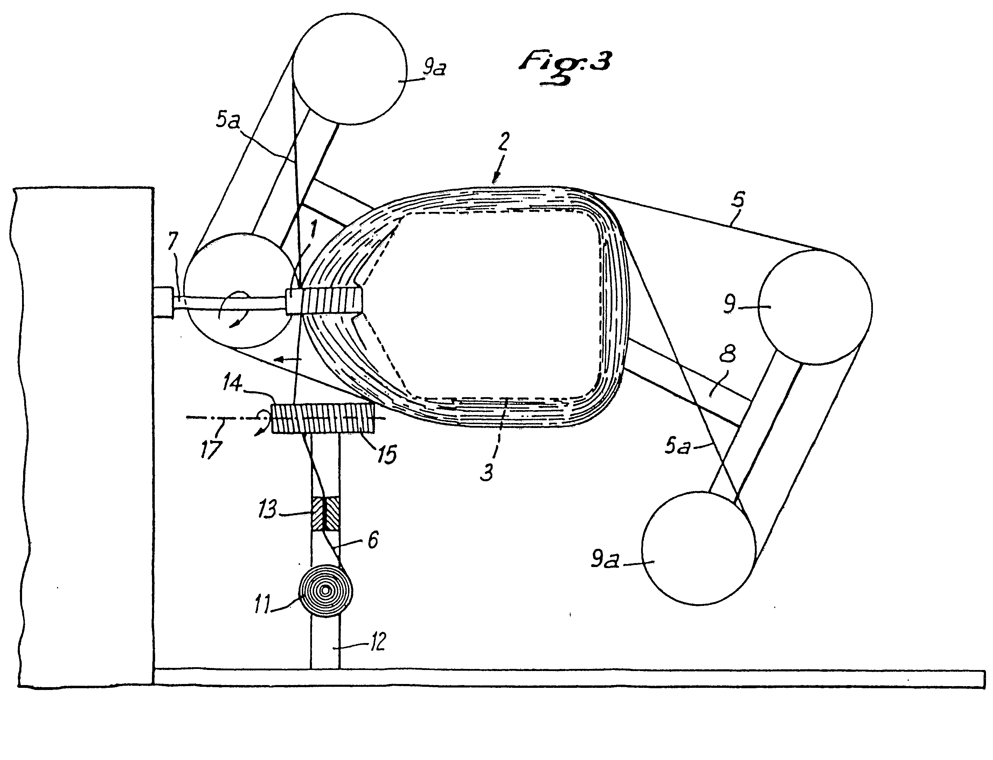

Comme il est illustré sur les figures 1 et 2, le procédé suivant l'invention vise à assurer une isolation parfaite d'une traversée solide, en l'occurrence du col cylindrique 1 d'un réservoir de fluide cryogénique 2 comportant une cuve 3 en aluminium, acier inoxydable ou autre matière, y compris en matière plastique. Le col de remplissage 1 est fixé à la cuve 3, par tout moyen approprié, le long d'une collerette supérieure 4 bordant l'orifice de la cuve 3.

L'isolation thermique du réservoir 2 est réalisée par enveloppement du col 1 et de la cuve 3 par une bande isolante 5 formant une succession de spires ou couches isolantes superposées et régulièrement réparties autour de l'axe du réservoir 2. Cet enveloppement est réalisé au moyen d'une machine qui sera décrite plus loin en détail en référence à la figure 3. La bande isolante 5 est de tout type approprié: elle peut être constituée, notamment, par la superposition d'une feuille mince d'aluminium, formant réflecteur, et d'une feuille de papier isolant formant intercalaire.

Suivant l'invention on enroule, sur le col 1, un peu avant l'application des couches isolantes 5, une «ficelle» ou un cordon 6 de manière que ce cordon forme un enroulement hélicoïdal sur le col 1. Par cordon on entend tout corps flexible allongé susceptible d'être enroulé en hélice. Ce cordon ou «ficelle» peut être en n'importe quelle matière isolante thermiquement compatible avec l'utilisation et la fabrication du matériel concerné. Il peut être réalisé, notamment, dans la même matière (papier) que celle constituant l'intercalaire de la bande isolante 5, ou bien encore en polypropylène. On peut également envisager d'utiliser des «ficelles» ou cordons préencollés qui seraient alors rendus solidaires du col après polymérisation de la colle. La «ficelle» ou cordon peut être aussi enrobé d'une couche de résine intumescente permettant d'augmenter la zone d'appui des couches isolantes 5.

Comme on le verra plus loin, l'application du cordon isolant hélicoïdal 6 et des couches isolantes 5 s'effectue alors que l'ensemble du réservoir 2 est entraîné en rotation autour de son axe. Comme on peut le voir sur la figure 1, le cordon isolant 6 vient en contact avec la surface périphérique du col 1 en un point A en étant tangent à cette surface en ce point, tandis que chaque couche isolante 5 quitte le col 1, pour recouvrir ensuite la cuve 3, en un point B en étant sensiblement tangente au col en ce point. Le point A est situé en arrière du point B en considérant le sens de rotation du réservoir 2 indiqué par la flèche f sur la figure 1 (sens des aiguilles d'une montre), d'un angle qui peut être par exemple d'environ 90°. Cela a pour effet que le cordon isolant 6 est appliqué au contact de la surface du col 1, au point A, environ un quart de tour avant qu'en ce même pont A soit appliquée une spire de la bande isolante 5.

Comme on peut le voir sur les figures 1 et 2, les couches isolantes successives 5 prennent appui, par leurs bords proches du col 1, sur les spires successives du cordon isolant 6 enroulé préalablement en hélice sur le col 1. On voit donc qu'il est possible, en choisissant d'une manière appropriée la nature, le diamètre moyen, le pas et le diamètre d'enroulement du cordon isolant 6 qui forme un support pour les couches isolantes 5, de recouvrir un large domaine de caractéristiques d'isolation dans la zone du col 1.

Le cordon hélicoïdal isolant 6 permet donc de répartir judicieusement, le long du col 1, les couches isolantes 5 en contact à cet endroit avec le col, et le nombre des spires formées par le cordon 6 sur le col 1 correspond au nombre de couches d'isolation superposées nécessaires pour l'isolation totale du réservoir 2.

Sur la figure 3 est représentée une machine à calorifuger permettant d'obtenir l'isolation parfaite d'un réservoir telle que représentée sur les figures 1 et 2. Cette machine comporte un arbre horizontal 7 entraîné en rotation et sur lequel est enfilé et bloqué le col 1 du réservoir 2, de manière à entraîner en rotation l'ensemble du réservoir 2 autour de son axe, c'est-à-dire de l'axe de l'arbre d'entraînement horizontal 7. La machine comporte par ailleurs un ensemble d'enrubannage 8 qui comporte des bobines 9 de bandes isolantes 5 et éventuellement des bobines 9a de bandes très minces 5a d'aluminium (réflecteur), cet ensemble d'enrubannage 8 étant monté à rotation, de la manière habituelle, autour d'un axe horizontal incliné par rapport à l'axe de l'arbre 7 et recoupant cet axe.

Suivant l'invention la machine comporte une bobine 11 montée à rotation sur un support 12 et à partir de laquelle est dévidée la «ficelle» ou le cordon isolant 6. Ce cordon 6 passe ensuite à travers un frein 13 assurant une tension régulière du cordon 6, puis sur une débobineuse 14 parallèle au col 1 du réservoir et alignée transversalement avec ce col. Cette débobineuse 14 est constituée par un corps cylindrique de même diamètre que le col 1 du réservoir et dans la surface périphérique duquel est ménagé un filetage 15. Ce corps cylindrique est monté à rotation de manière à pouvoir tourner librement autour de son axe horizontal 17 qui est parallèle à l'axe de l'arbre 7. Le cordon 6 est enroulé dans le filetage 15 du corps cylindrique de manière à former au moins une spire, et il quitte ensuite ce corps cylindrique pour s'étendre en direction du col 1, sur lequel il est enroulé en hélice. Le pas du filetage de la débobineuse 14 est fonction du pas de l'enroulement hélicoïdal désiré du cordon 6 sur le col 1.

Au démarrage d'une opération d'isolation, on fixe le cordon isolant 6 sur la partie basse du col 1, c'est-à-dire à proximité immédiate de la cuve du réservoir. Lorsque la machine est mise en marche, le réservoir 2 est entraîné en rotation autour de son axe, par l'arbre 7, et par conséquent le cordon 6 est enroulé autour du col 1. La rotation du col 1 est transmise, par le cordon 6, à la débobineuse 14, qui tourne alors à la même vitesse que le corps du fait que celui-ci et le corps de la débobineuse 14 ont le même diamètre. Du fait que le cordon 6 est engagé dans le filetage 15, ce cordon quitte la débobineuse 14 en un point qui se déplace régulièrement parallèlement à l'axe 17. Cela a pour conséquence que le cordon 6 est enroulé progressivement, sur le col 1, suivant une hélice dont le pas est fonction de celui du filetage 15.

Par conséquent si l'on désire changer de répartition des couches isolantes le long du col 1 et/ou de diamètre de col, il suffit de changer en conséquence la débobineuse 14. L'utilisation de diamètres et de pas différents permet d'obtenir des pas variables pour l'hélice formée par le cordon 6.

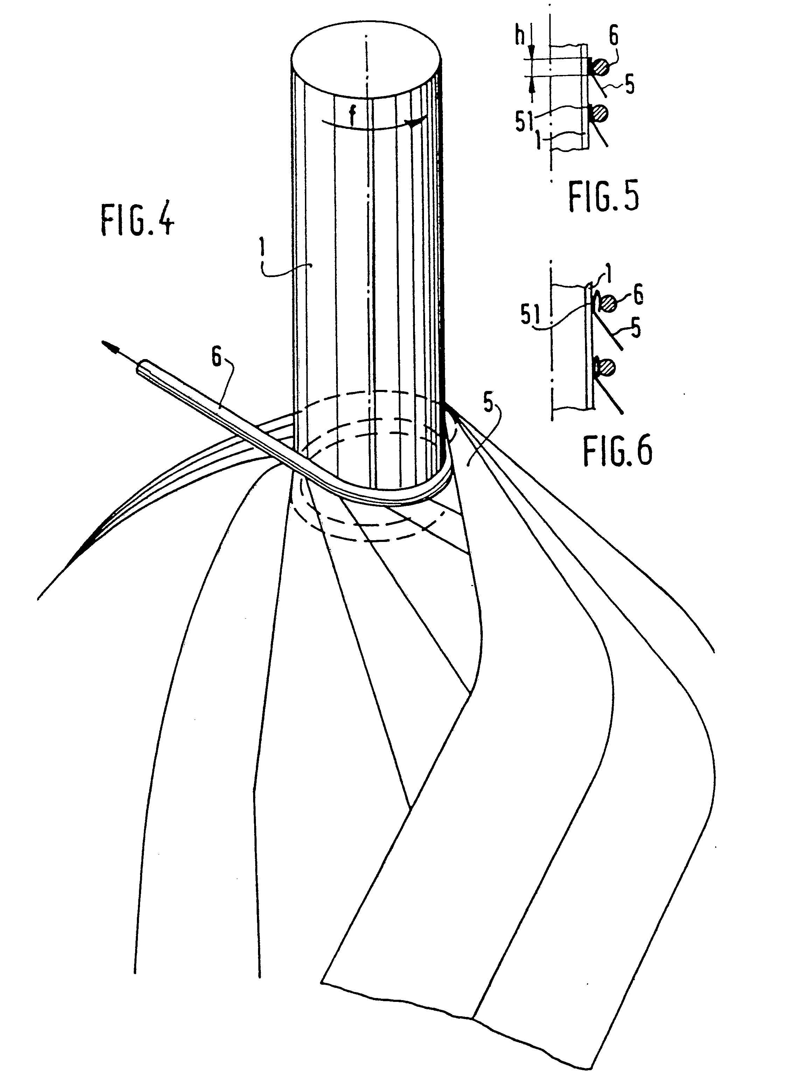

On a utilisé sur les figures 4 à 8 les mêmes numéros de référence qu'aux figures 1 à 3 pour désigner les éléments correspondants.

Suivant la figure 4, la bande 5 est, pour chaque couche, appliquée en premier sur le col 1 de façon que sa partie marginale intérieure 51 recouvre une petite fraction $\underline{h}$ de la longueur du col, comme on le voit à la figure 5. Pendant une fraction de tour du réservoir, le contact de la bande et du col est maintenu par simple frottement, puis le cordon 6 vient s'appliquer sur la partie marginale 51 et coince celle-ci sur le col. On obtient ainsi la configuration illustrée à la figure 5.

On comprend que ce mode d'enroulement peut s'obtenir automatiquement avec la machine illustrée à la figure 3, en modifiant simplement les conditions de démarrage de l'enroulement.

Pour améliorer la résistance mécanique de la bande à son contact avec le col, on peut (figure 6) replier sa partie marginale intérieure 51 sur elle-même avant son application sur le col, de sorte que c'est une double épaisseur de bande qui est coincée entre le col et le cordon.

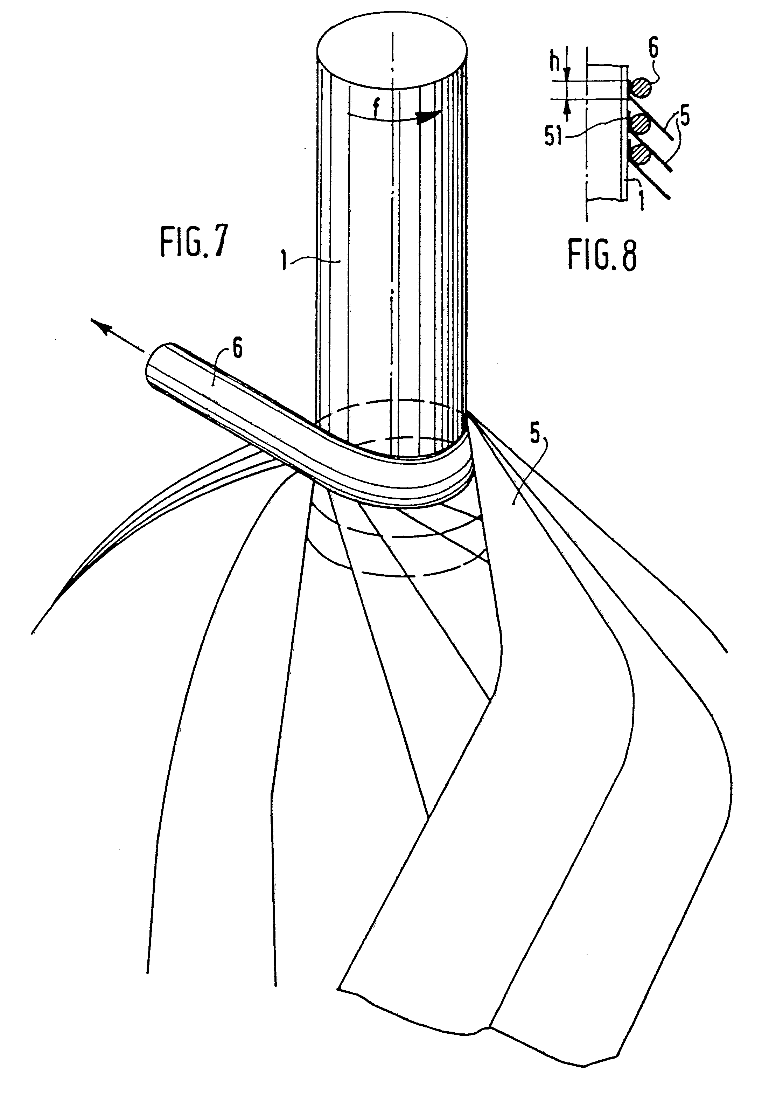

Si l'on augmente le diamètre du cordon 6 et/ou on diminue son pas d'enroulement, on arrive au cas limite des figures 7 et 8, où chaque couche comporte une partie marginale 51 coincée par une spire du cordon, comme précédemment, et s'appuie en outre sur la spire précédente, comme aux figures 1 à 3. On comprend que l'on peut obtenir le même résultat en procédant comme décrit en regard de ces figures 1 à 3, c'est-à-dire en appliquant sur le col, pour chaque couche, d'abord le cordon 6 puis la bande 5.

Dans une autre variante, le cordon 6 préencollé est enroulé en hélice et fixé sur toute la longueur utile du col 1, puis on effectue l'enroulement des couches isolantes. Dans ce cas, bien entendu, on ne peut obtenir qu'un simple appui des couches successives sur le cordon 6.

**Revendications**

1. Procédé de fabrication d'une isolation thermique multicouche autour et le long d'une traversée solide, notamment d'un col de remplissage d'un réservoir pour fluide cryogénique, dans lequel on enroule autour de la traversée et de la cuve du réservoir au moins une bande en matière isolante thermiquement en formant plusieurs couches superposées, caractérisé en ce qu'on fixe chaque emplacement de contact de la bande (5) avec la traversée (1) au moyen d'un cordon (6) appliqué en hélice sur ladite traversée.

2. Procédé suivant la revendication 1, caractérisé en ce qu'on enroule préalablement le cordon (6) sur la traversée (1), juste avant l'application de la bande isolante (5), et on applique ensuite les couches isolantes successives (5) de manière que ces couches prennent appui, à l'endroit où elles sont en contact avec la traversée (1), sur le cordon hélicoïdal (6) préalablement enroulé, en se superposant les unes aux autres le long de ce cordon (6).

3. Procédé suivant la revendication 2, caractérisé en ce qu'on applique le cordon (6) sur la traversée (1) en un point (A) situé à environ un quart de tour en avant du point (B) de la traversée où est appliquée ensuite la bande isolante (5).

4. Procédé suivant la revendication 1, caractérisé en ce que pour chaque couche isolante, on applique tout d'abord la bande isolante (5) sur la traversée (1), de façon que la partie marginale intérieure (51) de cette bande recouvre une petite fraction (h) de la longueur de la traversée, puis on enroule le cordon sur ladite partie marginale, en coinçant celle-ci sur la traversée.

5. Procédé suivant la revendication 4, caractérisé en ce qu'on replie sur elle-même ladite partie marginale (51) de la bande (5) avant son application sur la traversée (1).

6. Procédé suivant l'une quelconque des revendications 1 à 5, caractérisé en ce qu'on choisit le diamètre du cordon (6) et son pas d'enroulement de façon que la bande (5) soit coincée sur la traversée (1) par une spire du cordon (6) et prenne en outre appui sur la spire précédente de ce cordon.

7. Procédé suivant la revendication 1, caractérisé en ce qu'on enroule au préalable en hélice le cordon (6) sur la traversée (1) et on le fixe sur toute la longueur utile de cette traversée, puis on procède à l'enroulement de la bande (5) autour de la traversée et de la cuve du réservoir de façon que cette bande prenne appui sur le cordon à chaque emplacement de contact avec la traversée.

8. Procédé suivant l'une quelconque des revendications 1 à 7, caractérisé en ce qu'on utilise un cordon (6) en matière isolante thermiquement.

9. Procédé suivant la revendication 8, caractérisé en ce qu'on utilise un cordon isolant (6) en la même matière que l'intercalaire isolant de la bande isolante (5) lorsqu'elle est du type double, à feuille d'aluminium formant réflecteur et à feuille de papier isolant formant intercalaire.

10. Machine à calorifuger pour la mise en œuvre du procédé suivant l'une quelconque des revendications 1 à 9, comprenant des moyens pour entraîner en rotation, autour de son axe, un réservoir de fluide à calorifuger, et des moyens pour enrouler autour du récipient et de son col de remplissage au moins une bande isolante formant plusieurs couches isolantes superposées, caractérisée en ce qu'elle comprend des moyens (11, 13, 14) pour enrouler en hélice un cordon (6) sur le col (1) du réservoir.

11. Machine suivant la revendication 10, caractérisée en ce que les moyens (11, 13, 16) d'enroulement du cordon (6) sont adaptés pour appliquer ce dernier sur le col (1) juste avant l'application ultérieure de la bande isolante (5) en appui sur le cordon hélicoïdal (6) formant support.

12. Machine suivant l'une des revendications 10 et 11, caractérisée en ce qu'elle comprend une bobine (11) de cordon (6), une débobineuse (14) comportant un corps cylindrique disposé parallèlement au col (1) du récipient, en étant aligné transversalement avec celui-ci, ce corps cylindrique présentant dans sa surface périphérique un filetage (15) dans lequel passe le cordon (6) issu de la bobine, en formant au moins une spire, le cordon (6) s'étendant entre la débobineuse (14) et le col (1) du réservoir pour constituer sur ce col, au fur et à mesure de la rotation du réservoir et de celle de la débobineuse (14) qui en résulte, une hélice dont le pas est fonction de celui du filetage du corps cylindrique de la débobineuse (14).

13. Machine suivant la revendication 12, caractérisée en ce qu'elle comporte un frein (13) de régulation de la tension du cordon (6), entre la bobine (11) et la débobineuse (14).

14. Machine suivant l'une des revendications 12 et 13, caractérisée en ce que la débobineuse (14) est interchangeable en fonction du changement de la répartition des couches isolantes le long du col (1) et/ou du diamètre de ce col.

15. Réservoir pour fluide cryogénique comportant un col de remplissage (1) isolé au moyen de couches successives (5) dont l'emplacement de contact avec le col est fixé par un cordon (6) enroulé en hélice sur le col et obtenu par le procédé suivant l'une quelconque des revendications 1 à 9.

**Patentansprüche**

1. Verfahren zur Herstellung einer thermischen, mehrschichtigen Isolierung um und entlang einer festen Durchführung, insbesondere eines Füllhalses eines Vorratsgefässes für kryogenes Fliessmittel, bei welchem man um die Durchführung und den Behälter des Vorratsgefässes mindestens ein Band aus thermisch isolierendem Material wickelt, wobei man mehrere übereinanderliegende Schichten bildet, dadurch gekennzeichnet, dass man jede Kontaktstelle des Bandes (5) mit der Durchführung (1) mittels einer Schnur (6) befestigt, welche schraubenförmig auf die Durchführung aufgebracht wird.

2. Verfahren nach Anspruch 1, dadurch gekennzeichnet, dass man zuvor die Schnur (6) gerade vor der Aufbringung des Isolierbandes (5) auf die Durchführung (1) wickelt und dann die aufeinanderfolgenden, isolierenden Schichten (5) derart aufbringt, dass diese Schichten an der Stelle, wo sie mit der Durchführung (1) in Kontakt sind, auf der zuvor gewickelten, schraubenförmigen Schnur (6) dadurch Halt finden, dass sich die einen längs dieser Schnur (6) über die anderen legen.

3. Verfahren nach Anspruch 2, dadurch gekennzeichnet, dass man die Schnur auf die Durchführung (1) an einem Punkt (A) aufbringt, der ungefähr ein Viertel Umlauf vor der Stelle (B) der Durchführung angeordnet ist, wo dann das Isolierband (5) aufgebracht wird.

4. Verfahren nach Anspruch 1, dadurch gekennzeichnet, dass man für jede Isolierschicht zuerst das Isolierband (5) auf die Durchführung (1) derart aufbringt, dass der innere Randteil (51) dieses Bandes einen kleinen Bruchteil (h) der Länge der Durchführung abdeckt und man dann die Schnur auf diesen Randteil wickelt, indem man diesen auf der Durchführung festklemmt.

5. Verfahren nach Anspruch 4, dadurch gekennzeichnet, dass man diesen Randteil (51) des Bandes (5) vor seiner Aufbringung auf die Durchführung (1) auf sich selbst zusammenfaltet.

6. Verfahren nach einem der Ansprüche 1 bis 5, dadurch gekennzeichnet, dass man den Durchmesser der Schnur (6) und ihren Wicklungsschritt derart wählt, dass das Band (5) auf der Durchführung (1) durch eine Spiralwindung der Schnur (6) festgeklemmt wird und ausserdem seinen Halt auf der vorhergehenden Spiralwindung diser Schnur findet.

7. Verfahren nach Anspruch 1, dadurch gekennzeichnet, dass man vorher die Schnur (6) spiralförmig auf die Durchführung (1) wickelt und dass man sie auf der ganzen Nutzlänge dieser Durchführung befestigt und man dann mit dem Aufwickeln des Bandes (5) um die Durchführung herum und um den Behälter des Vorratsgefässes herum derart fortfährt, dass dieses Band und der Schnur an jeder Kontaktstelle mit der Durchführung Halt findet.

8. Verfahren nach einem der Ansprüche 1 bis 7, dadurch gekennzeichnet, dass man eine Schnur (6) aus thermisch isolierendem Material verwendet.

9. Verfahren nach Anspruch 8, dadurch gekennzeichnet, dass man eine isolierende Schnur (6) aus demselben Material verwendet wie die isolierende Einlage des isolierenden Bandes (15), wenn es vom doppelten Typ ist, Aluminiumfolie, welche den Reflektor bildet und isolierende Papierfolie, welche die Einlage bildet.

10. Maschine zum Wärmeisolieren für die Durchführung eines Verfahrens nach einem der Ansprüche 1 bis 9, mit Mitteln zum Drehen eines Vorratsgefässes für Fliessmittel, welches wärmeisoliert werden soll, um seine Achse und mit Mitteln zum Wickeln mindestens eines isolierenden Bandes um das Gefäss und seinen Füllhals, wobei das Band mehrere, übereinanderliegende, isolierende Schichten bildet, dadurch gekennzeichnet, dass sie Mittel (11, 13, 14) zum schraubenförmigen Aufwickeln einer Schnur (6) auf den Hals (1) des Vorratsgefässes aufweist.

11. Maschine nach Anspruch 10, dadurch gekennzeichnet, dass die Mittel (11, 13, 16) zum Aufwickeln der Schnur (6) geeignet sind, um letztere auf dem Hals (1) anzubringen, gerade vor der weiteren Aufbringung des Isolierbandes (5) unter Abstützung auf der schraubenförmigen Schnur (6), welche die Stütze bildet.

12. Maschine nach einem der Ansprüche 10 und 11, dadurch gekennzeichnet, dass sie eine Spule (11) für Schnur (6) und ein Abspulgerät (14) aufweist mit einem zylindrischen Körper, der parallel zum Hals (1) des Gefässes angeordnet ist, welcher quer zu diesem ausgerichtet ist, wobei dieser zylindrische Körper an seiner Umfangsoberfläche ein Gewinde (15) hat, in welchem die von der Spule ausgegebene Schnur (6) läuft, wobei wenigstens eine Spiralwindung gebildet wird und sich die Schnur (6) zwischen dem Abspulgerät (14) und dem Hals (1) des Gefässes erstreckt, um auf diesem Hals entsprechend der Drehung des Vorratsgefässes und der des Abspulgerätes (14) die sich daraus ergibt, eine Schraubenwicklung zu bilden, deren Teilung eine Funktion der des Gewindes des zylindrischen Körpers des Abspulgerätes (14) ist.

13. Maschine nach Anspruch 12, dadurch gekennzeichnet, dass sie eine Regulierungsbremse (13) für die Spannung der Schnur (6) zwischen der Spule (11) und dem Abspulgerät (14) aufweist.

14. Maschine nach einem der Ansprüche 12 und 13, dadurch gekennzeichnet, dass das Abspulgerät (14) in Funktion der Veränderung der Verteilung der isolierenden Schichten längs des Halses (1) und/oder des Durchmessers des Halses auswechselbar ist.

15. Vorratsgefäss für kryogenes Fliessmittel mit einem Füllhals (1), der mittels aufeinanderfolgender Schichten (5) isoliert ist, deren Kontaktstelle mit dem Hals durch eine Schnur (6) befestigt ist, die in Schraubenform auf dem Hals aufgewickelt ist und durch das Verfahren nach einem der Ansprüche 1 bis 9 erhalten wird.

## Claims

1. Method for the production of a multilayer thermal insulation around and along a solid passage, in particular a filler neck for a cryogenic fluid container, in which at least one heat insulating tape is wound around the passage and the body of the container whilst forming several superposed layers, characterised in that each contact location of the tape (5) with the passage (1) is secured by means of a cord (6) laid helically around the said passage.

2. Method according to Claim 1, characterised in that the cord (6) is initially wound on the passage (1) just before applying the insulating tape (15), and the successive insulating layers (5) are thereupon applied in such manner that these layers bear, at the points at which they are in contact with the passage (10) on the helial cord (6) previously wound on, whilst being superposed one over another along this cord (6).

3. Method according to Claim 2, characterised in that the cord (6) is applied on the passage (1) at a point (A) situated approximately one quarter of a turn before the point (B) of the passage at which the insulating tape (5) is thereafter applied.

4. Method according to Claim 1, characterised in that for each insulating layer, the insulating tape (5) is first applied on the passage (1) in such a way that the inner marginal part (51) of this tape covers a small fraction (h) of the length of the crossing, after which the cord is wound around this marginal part whilst clamping the latter onto the passage.

5. Method according to Claim 4, characterised in that the said marginal part (51) of the tape (5) is folded over on itself before its application on the passage (1).

6. Method according to any one of the Claims 1 to 5, characterised in that the diameter and winding pitch of the cord (6) are so selected that the tape (5) is clamped on to the passage (1) by a turn of the cord (6) and furthermore bears on the preceding turn of this cord.

7. Method according to Claim 1, characterised in that the cord (6) is initially wound in a coil on the passage (1) and is secured throughout the useful length of this passage, after which the winding of the tape (5) around the passage and body of the container is carried out in such a way that this tape bears on the cord at each place of contact with the passage.

8. Method according to any one of the Claims 1 to 7, characterised in that use is made of a cord (6) of thermally insulating material.

9. Method according to Claim 8, characterised in that there is used an insulating cord (6) which consists of the same material as the insulating insert of the insulating tape (5) if it is of the doubled type, comprising an aluminium foil forming a reflector and a sheet of insulating paper forming an insert.

10. Heat-insulating machine for application of a method according to any one of Claims 1 to 9, comprising means for driving a fluid container which is to be thermally insulated in rotation around its axis, and means for winding around the container and its filler neck at least one insulating strip forming several superposed insulating layers, characterised in that it comprises means (11, 13, 14) for winding a cord (6) helically onto the neck (1) of the container.

11. Machine according to Claim 10, characterised in that the means (11, 13, 16) for winding the cord (6) are arranged to apply the latter onto the neck (1) just before the subsequent application of the insulating tape (5) to bear on the helical cord (6) forming a support.

12. Machine according to one of the Claims 10 and 11, characterised in that it comprises a reel (11) of cord (6), an unwinder (14) having a cylindrical body positioned parallel to the neck of the container while being transversely aligned with the latter, this cylindrical body having a screwthread (15) in its peripheral surface, into which passes the cord (6) coming from the reel whilst forming at least one turn, the cord (6) extending between the unwinder (14) and the neck (1) of the container to form on this neck, in step with the rotation of the container and with the consequent rotation of the unwinder (14) a coil the pitch of which is a function of that of the screw thread of the cylindrical body of the unwinder (14).

13. Machine according to Claim 12, characterised in that it comprises a brake (13) for controlling the tension of the cord (6), between the reel (11) and the unwinder (14).

14. Machine according to one of the Claims 12 and 13, characterised in that the unwinder (14) is interchangeable as a function of the change of the distribution of the insulating layers along the neck (1) and/or the diameter of this neck.

15. Container for cryogenic fluid comprising a filler neck (1) insulated by means of successive layers (5) of which the contact location with the neck is secured by means of a cord (6) wound in a coil on the neck and obtained by the method according to any one of the Claims 1 to 9.

*Fig. 2*

*Fig. 1*

Fig.3

FIG.4

FIG.5

FIG.6

FIG.7

FIG.8